# EUROPÄISCHE PATENTSCHRIFT

(11) **EP 1 684 136 B1**
(45) Veröffentlichungstag und Bekanntmachung des Hinweises auf die Patenterteilung: **30.12.2015**
(21) Anmeldenummer: 06009502.3
(22) Anmeldetag: 15.06.2001
(51) Int. Cl.: G05B 19/042, G05B 19/414, G05B 19/408

(54) **Verfahren zur seriellen Datenübertragung zwischen einem Positionsmesssystem und einer Verarbeitungseinheit**
Method for serial data transmission between a position measuring system and a processing unit
Méthode de transmission sérielle de données entre un système de mesure de position et un unité de traitement

(30) Priorität: 21.06.2000 DE 10030358
(43) Veröffentlichungstag der Anmeldung: 26.07.2006
(62) Teilanmeldung aus: 01113588.6
(73) Patentinhaber: Dr. Johannes Heidenhain GmbH, 83292 Traunreut (DE)
(72) Erfinder: Wastlhuber, Robert, 84518 Garching/Alz (DE); Strasser, Erich, 83308 Trostberg (DE); Eisenberger, Christian, 83324 Ruhpolding (DE); Bratzdrum, Erwin, 83359 Hallabruck (DE)

(56) Entgegenhaltungen:
- EP-A- 0 660 209
- EP-A- 0 989 701
- US-A- 5 371 859
- KENNEL R ET AL: "DATENKOMMUNIKATION UEBER DAS BUSSYSTEM SERCOS INTERFACE" AUTOMATISIERUNGSTECHNISCHE PRAXIS - ATP, OLDENBOURG VERLAG. MUNCHEN, DE, Bd. 33, Nr. 7, 1. Juli 1991 (1991-07-01), Seiten 363-368, XP000243095 ISSN: 0178-2320

## Beschreibung

Die vorliegende Erfindung betrifft ein Verfahren zur seriellen Datenübertragung zwischen einem Positionsmesssystem und einer Verarbeitungseinheit.

Ein Verfahren zur seriellen Datenübertragung zwischen einem Positionsmesssystem und einer Verarbeitungseinheit ist aus der EP 0 660 209 B1 der Anmelderin bekannt. In dieser Druckschrift wird die bidirektionale, serielle Übertragung von Positionsdaten und weiteren Daten bzw. Zusatzdaten zwischen einem Positionsmesssystem und einer nachgeordneten Verarbeitungseinheit auf einer Datenleitung vorgeschlagen. Als weitere Daten werden beispielsweise spezifische Parameter des jeweiligen Positionsmesssystems ausgetauscht, wie Daten bzgl. des Messsystem-Typs, der Signalperiode, der Referenzmarkenlage uvm.. Sowohl die Positionsdaten als auch die weiteren Daten werden über die Datenleitung als digitale Datenwörter übertragen. Die Übertragung von Positionsdaten oder weiteren Daten an die Verarbeitungseinheit erfolgt jeweils auf einen entsprechenden Anforderungsbefehl der Verarbeitungseinheit hin. Im Fall der angeforderten Übertragung umfangreicher Zusatzdaten hat dies zur Folge, dass während der Übertragung dieser Daten auf Seiten der Verarbeitungseinheit keine Positionsdaten zur Verfügung stehen. Für eine ggf. geforderte hochdynamische digitale Regelung auf Basis der Positionsdaten des Positionsmesssystems können sich aufgrund des starren Übertragungsrasters und der daraus resultierenden beschränkten Übertragungsgeschwindigkeit Probleme ergeben.

Aufgabe der vorliegenden Erfindung ist es daher, ein Verfahren zur seriellen Datenübertragung zwischen einem Positionsmesssystem und einer Verarbeitungseinheit anzugeben, das eine zuverlässige hochdynamische Regelung auf Basis der Positionsdaten des Positionsmesssystems ermöglicht. Des Weiteren soll auch ein ständiger Austausch weiterer Daten zwischen der Verarbeitungseinheit und dem Positionsmesssystem möglich sein.

Diese Aufgabe wird gelöst durch Verfahren mit den Merkmalen der Ansprüche 1 oder 2.

Vorteilhafte Ausführungsformen der erfindungsgemäßen Verfahrens ergeben sich aus den Maßnahmen, die in den von Anspruch 1 oder 2 abhängigen Patentansprüchen aufgeführt sind.

Die erfindungsgemäßen Maßnahmen gewährleisten nunmehr, dass auch im Fall schneller Regelungszyklen aktuelle Positionsdaten des Positionsmesssystems auf Seiten der Verarbeitungseinheit zur Verfügung stehen. Des Weiteren ist der neben der Übertragung von Positionsdaten auch der Austausch weiterer Daten zwischen Verarbeitungseinheit und Positionsmesssystem möglich. Dies kann sichergestellt werden, da auch im Fall hochdynamischer Regelungen der Datenaustausch nicht ausschließlich in der Übertragung von Positionsdaten besteht. Erfindungsgemäß werden deshalb die zu übertragenden Daten in zeitkritische Daten und zeitunkritische Daten aufgeteilt. Insbesondere die Positionsdaten sowie die zugehörigen Positions-Anforderungsbefehle stellen dabei zeitkritische Daten dar, die insbesondere für eine schnelle Lageregelung erforderlich sind; die weiteren Daten in Form von Zusatzdaten und Zusatzdaten-Befehlen hingegen stellen zeitunkritische Informationen dar, deren Verarbeitung in deutlich größeren Zykluszeiten möglich ist. Ferner wird anstelle eines starren Anforderungs-Anwort-Übertragungsrasters nunmehr lediglich sichergestellt, dass die Positions-Anforderungsbefehle und die Positionsdaten reaktionsschnell auf Seiten des Positionsmesssystems bzw. der Verarbeitungseinheit zur Verfügung stehen. Es ist nicht mehr zwingend, dass auf einen Zusatzdaten-Befehl unmittelbar im Gegenzug die angeforderten Zusatzdaten übertragen werden. Die Übertragung der angeforderten Zusatzdaten kann vielmehr auch deutlich später erfolgen. Hierbei ist lediglich sicherzustellen, dass die später übertragenen Daten zu dieser Anforderung auf Seiten der Verarbeitungseinheit eindeutig identifizierbar sind bzw. zugeordnet werden können. Es ist erfindungsgemäß auch möglich, die zu einer Anfrage gehörenden Zusatzdaten in mehreren, zeitlich nicht-zusammenhängenden Zusatzdaten-Blöcken zu übertragen.

Als weiterer Vorteil der vorliegenden Erfindung ist anzuführen, dass prinzipiell jederzeit über einen entsprechenden Positionsdaten-Anforderungsbefehl die aktuellen Positionsdaten vom Positionsmesssystem an die Auswerteeinheit übertragbar sind. Dies kann beispielsweise auch im Fall der aktuellen Übertragung zeitunkritischer Daten, die gerade als kontinuierlicher Datenstrom übertragen werden. Bei der angeforderten Übertragung aktueller Positionsdaten ist dieser Datenstrom jederzeit unterbrechbar; nach der angeforderten Übertragung der zeitkritischen Positionsdaten läuft anschließend wieder die Übertragung der zeitunkritischen Daten weiter etc..

Es ist möglich die vorliegende Erfindung in einer ersten Variante derart auszubilden, dass die Übertragung aller Daten über einen einzigen, gemeinsamen Datenkanal erfolgt, d.h. einen Halbduplex-Betrieb vorzusehen. Alternativ ist es jedoch ebenso möglich, für jede Übertragungsrichtung einen separaten Datenkanal vorzusehen, d.h. zwei getrennte Datenkanäle für einen Vollduplex-Betrieb einzusetzen.

Vorteilhaft ist ferner, dass verschiedene Positionsdaten-Anforderungsbefehle existieren können, denen unterschiedliche Abarbeitungsprioritäten zugeordnet werden. So ist es z.B. möglich, mit höchster Priorität die Übertragung von aktuellen Positionsdaten an die Verarbeitungseinrichtung anzufordern, die dort zur hochdynamischen Positionsregelung genutzt werden. Mit niedrigerer Abarbeitungspriorität kann ein zweiter Positionsdaten-Anforderungsbefehl vorgesehen werden, der die Übertragung der aktuellen Positionsdaten an die Verarbeitungseinrichtung anfordert, die dort zur Digitalisierung einer Werkstückkontur verwendet wird. Ein derartiger Positionsdaten-Anforderungsbefehl kann z.B. durch den Antastimpuls eines Tastsystems ausgelöst werden, mit dem ein Werkstück abgetastet wird. Grundsätzlich kann auch die Übertragung von Positionsdaten mit niedrigeren Abarbeitungsprioritäten durch Positionsdaten-Anforderungsbefehle mit höheren Abarbeitungsprioritäten unterbrochen werden.

Insgesamt gewährleisten die erfindungsgemäßen Maßnahmen somit eine Übertragung von Positionsdaten an die Verarbeitungseinheit mit hoher Geschwindigkeit bzw. mit höchster Priorität derselben. Gleichzeitig ist jedoch auch die Übertragung weiterer zeitunkritischer Daten im Rahmen der seriellen Datenübertragung möglich. Des Weiteren ist zu erwähnen, dass dies mit einem geringen Aufwand im Hinblick auf die erforderliche Verkabelung möglich ist.

Die vorliegende Erfindung ist ferner unabhängig von der physikalischen Ausbildung einer entsprechenden Schnittstelle und kann auf Basis verschiedenster Schnittstellenkonzepte realisiert werden.

Weitere Vorteile sowie Einzelheiten der vorliegenden Erfindung ergeben sich aus der nachfolgenden Beschreibung der beiliegenden Figuren.

Dabei zeigt
- Figur 1: eine schematisierte Darstellung eines Teiles eines Übertragungsprotokolles zur Erläuterung einer ersten Variante des erfindungsgemäßen Verfahrens;
- Figur 2a - 2d: jeweils in schematischer Form den grundsätzlichen Aufbau verschiedener zeitkritischer und zeitunkritischer Datenwörter;
- Figur 3a - 3c: anhand von zwei Beispielen den zeitlichen Ablauf der Datenübertragung von der Auswerteeinheit zum Positionsmesssystem im Fall einer Anforderung von Positionsdaten während der laufenden Übertragung zeitunkritischer Daten;
- Figur 4: eine schematisierte Darstellung eines Teiles des Übertragungsprotokolles zur Erläuterung einer zweiten Variante des erfindungsgemäßen Verfahrens;
- Figur 5: ein stark schematisiertes Blockschaltbild einer Ausführungsform einer Vorrichtung, die zur Ausübung der erfindungsgemäßen Verfahren geeignet ist.

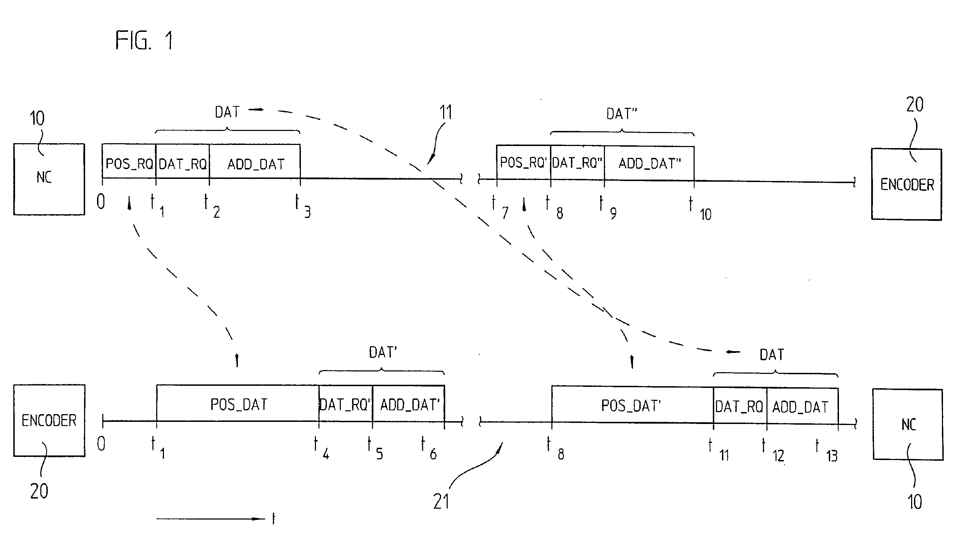

Anhand von Figur 1 sei nachfolgend eine erste Ausführungsform eines erfindungsgemäßen Verfahrens erläutert. Dargestellt ist in Figur 1 in schematischer Form hierbei ein zeitlicher Ausschnitt aus der seriellen Datenübertragung zwischen einem Positionsmesssystem (ENCODER) 20 und einer Verarbeitungseinheit (NC) 10. Im oberen Teil der Figur 1 sind die von der Verarbeitungseinheit 10 an das Positionsmesssystem übertragenen Daten dargestellt; im unteren Teil der Figur 1 sind die im gleichen Zeitintervall vom Positionsmesssystem 20 an die Verarbeitungseinheit 20 übertragenen Daten dargestellt. Als Positionsmesssystem 20 kann z.B. ein bekanntes absolutes oder inkrementales Messsystem vorgesehen sein, welches an einer Werkzeugmaschine zur hochpräzisen Erfassung der Position eines Maschinenteiles dienen. Als Verarbeitungseinheit 10 fungiert in diesem Fall dann eine übliche numerische Werkzeugmaschinensteuerung, die auf Basis der erhaltenen Daten die Werkstückbearbeitung steuert bzw. kontrolliert. Anhand des in Figur 1 dargestellten ersten Ausführungsbeispiels wird nachfolgend eine Vollduplex-Variante der vorliegenden Erfindung erläutert. Dies bedeutet, dass zwei separate Datenkanäle 11, 21 zur Datenübertragung vorgesehen sind. Ein erster Datenkanal 21 dient zur seriellen Übertragung von Daten vom Positionsmesssystem 20 zur Verarbeitungseinheit 10; ein zweiter Datenkanal 11 ist zur seriellen Übertragung von Daten von der Verarbeitungseinheit 10 zum Positionsmesssystem 20 hin vorgesehen. Die jeweiligen Daten werden in bekannter Art und Weise als digitale Datenwörter mit vorgegebener Größe in den beiden Datenkanälen 11, 21 übertragen. In einer möglichen Ausführungsform erfolgt die Übertragung von Datenwörtern mit einer Wortlänge von 10 Bit.

Im Zusammenhang mit den beiden Datenkanälen 11, 21 sei an dieser Stelle darauf hingewiesen, dass es im Rahmen der vorliegenden Erfindung nicht weiter wesentlich ist, wie diese physikalisch tatsächlich ausgebildet sind. Es ist vielmehr möglich, die vorliegende Erfindung auf Basis physikalisch unterschiedlicher serieller Schnittstellenkonzepte zu realisieren.
In einer möglichen Ausführungsform sind zwei separate Datenkanäle vorgesehen, die jeweils als verdrillte Zweidraht-Leitungen ausgebildet sind, über die die jeweiligen Daten als Takt- und Gegentaktsignale übertragen werden. Gleichzeitig erfolgt über diese Leitungen auch die Spannungs- und Stromversorgung der Positionsmesssystems.
Alternativ hierzu wäre aber auch möglich, das Positionsmesssystem über separate Leitungen zu versorgen; ebenso wäre eine Datenübertragung über Lichtwellenleiter denkbar usw..

Im dargestellten zeitlichen Ausschnitt des Datenaustausches zwischen der Verarbeitungseinheit 10 und dem Positionsmesssystem 20 übermittelt zum Zeitpunkt t = 0 die Verarbeitungseinheit 10 einen Positions-Anforderungsbefehl POS_RQ über den zweiten Datenkanal 11 an das Positionsmesssystem 20. Ein derartiger Positions-Anforderungsbefehl POS_RQ kann etwa durch ein Positions-Anforderungssignal der Positionsregelung ausgelöst werden. An die darauf erfolgende Übertragung des Positions-Anforderungsbefehl POS_RQ durch die Verarbeitungseinheit 20 schließt sich auf dem zweiten Datenkanal 11 umgehend die Übertragung weiterer Daten DAT an, beginnend zum Zeitpunkt t = t₁ und beendet zum Zeitpunkt t = t₃.

Wichtig ist im Rahmen der vorliegenden Erfindung nunmehr, dass die Verarbeitung der auf den Positions-Anforderungsbefehl POS_RQ folgend übertragenen weiteren Daten DAT auf der jeweiligen Gegenseite zeitunkritisch ist. Dies bedeutet, dass eine Bearbeitung dieser weiteren Daten DAT und/oder eine entsprechende Antwort hierauf nicht unmittelbar nach der Übertragung derselben erfolgen muss, sondern auch mit einem bestimmten zeitlichen Versatz Δt erfolgen kann. Mit höchster zeitlicher Priorität erfolgt hingegen die Verarbeitung bzw. Bearbeitung des zuerst übertragenen Positions-Anforderungsbefehls POS_RQ. Das Positionsmesssystem 20 beginnt demzufolge nahezu unmittelbar bzw. so schnell wie möglich nach dem Empfang des Positions-Anforderungsbefehls POS_RQ zum Zeitpunkt t = t₁ auf dem ersten Datenkanal 21 mit der Übertragung der Positionsdaten POS_DAT; beispielsweise wird hierbei die aktuelle Absolutposition als digitales Datenwort an die Verarbeitungseinheit 10 übertragen. Zum Zeitpunkt t = t₄ ist die Übertragung der Positionsdaten POS_DAT abgeschlossen, anschließend erfolgt auch auf dem ersten Datenkanal 21 analog zum zweiten Datenkanal 11 die Übertragung weiterer Daten DAT', deren Verarbeitung auf der Gegenseite wiederum zeitlich unkritisch ist.

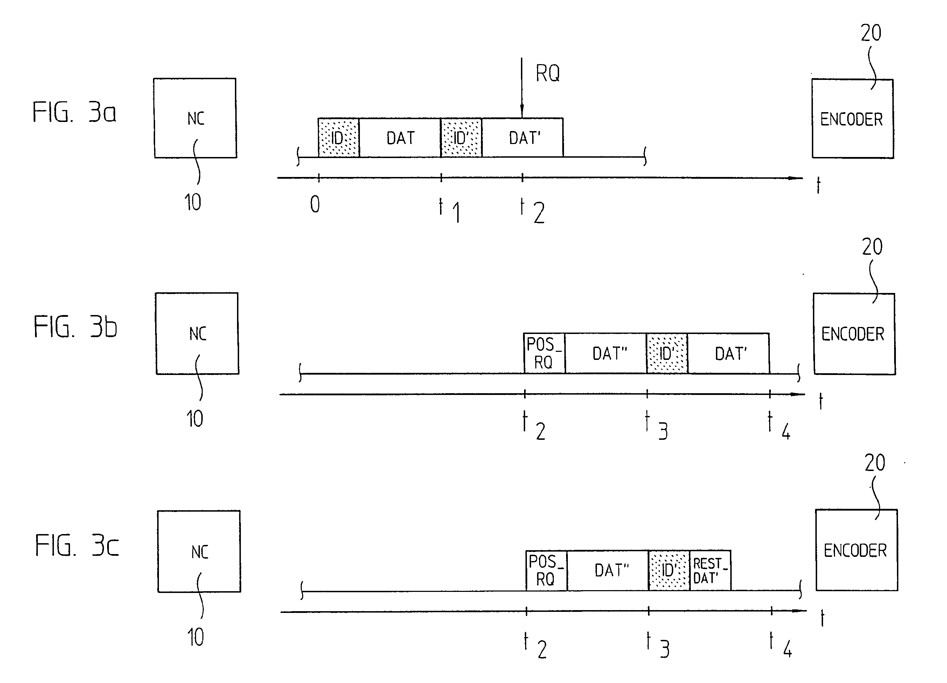

Im Rahmen des Übertragungsschemas der vorliegenden Erfindung erfolgt somit eine Aufteilung der übertragenen Daten zwischen dem Positionsmesssystem 20 und der Verarbeitungseinheit 10 in zeitkritische Daten und Befehle einerseits und zeitunkritische Daten und Befehle andererseits. Die Übertragung zeitkritischer Daten bzw. die Abarbeitung von Befehlen im Zusammenhang mit zeitkritischen Daten hat hierbei immer Vorrang vor der Übertragung bzw. Abarbeitung zeitunkritischer Daten und Befehle.
Als zeitkritische sind diejenigen Daten und Befehle zu betrachten, die im unmittelbaren Zusammenhang mit der aktuell erfassten Position des Positionsmesssystems 20 stehen und die auf Seiten der Verarbeitungseinheit 10 für eine hochdynamische Regelung schnell zur Verfügung stehen müssen. Im einzelnen handelt es sich im vorliegenden Beispiel um die von der Verarbeitungseinheit 10 übertragenen Positions-Anforderungsbefehle POS_RQ sowie die als Antwort vom Positionsmesssystem 20 hierauf übertragenen Positionsdaten POS_DAT. Als Positionsdaten POS_DAT können sowohl Absolutpositionsdaten als auch Inkrementalpositionsdaten übertragen werden.
Als zeitunkritische sind hingegen diejenigen ausgetauschten Daten und Befehle zu betrachten, die nicht im unmittelbaren Zusammenhang mit den aktuellen Positionsdaten stehen, wie beispielsweise Daten und/oder Parameter des Positionsmesssystems, Referenzierungsinformationen; Temperatur-Messwerte, Diagnosedaten uvm.. Im einzelnen wird auf diese Art der übertragenen zeitunkritischen Daten DAT, DAT' nachfolgend noch weiter eingegangen. Im Zusammenhang mit den weiteren zeitunkritischen Daten DAT, DAT' ist anzuführen, dass etwa auf einen eventuellen Befehl im Zusammenhang mit diesen Daten grundsätzlich nicht nötig ist, dass der entsprechende Befehl umgehend abgearbeitet wird; es ist vielmehr auch möglich, dass eine Bearbeitung dieses Befehles später erfolgen kann.
Im vorliegenden Beispiel umfassen die ausgetauschten zeitunkritischen Daten DAT, DAT' bis zum Zeitpunkt t = t₆ im einzelnen die Zusatzdaten ADD_DAT, ADD_DAT' sowie die Zusatzdaten-Befehle DAT_RQ, DAT_RQ'. Aufgrund einer derartigen Aufteilung der ausgetauschten Daten ist es auch möglich, dass eine laufende Übertragung zeitunkritischer Daten DAT, DAT' vom Positionsmesssystem 20 zur Verarbeitungseinheit 10 in Form eines kontinuierlichen Datenstromes durch einen Positions-Anforderungsbefehl POS_RQ von der Verarbeitungseinheit 10 unterbrochen wird und nahezu umgehend auf diesen Positions-Anforderungsbefehl POS_RQ eine Übertragung von aktuellen Positionsdaten POS_DAT an die Verarbeitungseinheit 10 erfolgt. Die derart unterbrochene Übertragung zeitunkritischer Daten DAT, DAT' wird zu einem späteren Zeitpunkt fertig gestellt. Das entsprechende Vorgehen wird im Verlauf der Beschreibung der Figuren 3a - 3c noch eingehend erläutert.

Ebenso ist es auch ohne eine derartige Unterbrechung der Übertragung zeitunkritischer Daten DAT, DAT' möglich, zusammengehörende Daten DAT, DAT' über mehrere Blöcke zeitlich verteilt zu übertragen, die in bestimmten Abständen aufeinander folgen und zwischen denen dann wiederum aktuelle Positionsdaten POS_DAT übertragen werden. Eine derartige Verteilung auf mehrere Blöcke kann etwa im Fall besonders umfangreicher zu übertragender zeitunkritischer Daten DAT nötig bzw. sinnvoll sein.

Im dargestellten Beispiel der Figur 1 werden als zeitunkritische Daten DAT, DAT' folgend auf die jeweiligen zeitkritischen Daten in Form von Positions-Anforderungsbefehl POS_RQ und Positionsdaten POS_DAT jeweils ein Zusatzdatenbefehl DAT_RQ, DAT_RQ' bzw. Zusatzdaten ADD_DAT, ADD_DAT' übertragen. Die weiteren zeitunkritischen Daten DAT, DAT' sind demzufolge im vorliegenden Beispiel in Zusatzdaten ADD_DAT, ADD_DAT' und Zusatzdaten-Befehle DAT_RQ, DAT_RQ' zu unterteilen. Bei den Zusatzdaten-Befehlen DAT_RQ, DAT_RQ' kann es sich beispielsweise um die Anforderung bestimmter Zusatzdaten ADD_DAT, ADD_DAT' von der jeweiligen Gegenseite handeln. So kann etwa die Verarbeitungseinheit 10 über einen entsprechenden Zusatzdaten-Befehl DAT_RQ vom Positionsmesssystem 20 bestimmte Messsystem-Parameter als Zusatzdaten ADD_DAT anfordern etc..

Als Zusatzdaten-Befehle DAT_RQ, DAT_RQ' können neben den erwähnten Anforderungsbefehlen auch noch weitere Befehle vorgesehen sein, beispielsweise Befehle im Zusammenhang mit der Programmierung oder Kalibrierung eines Positionsmesssystems usw..

Im Beispiel der Figur 1 überträgt die Verarbeitungseinheit 10 ab dem Zeitpunkt t = t₁, d.h. nach der Übertragung des Positions-Anforderungsbefehles POS_RQ, einen Zusatzdaten-Befehl DAT_RQ an das Positionsmesssystem 20, mit dem z.B. Zusatzdaten wie die Temperatur T des Positionsmesssystems 20 angefordert werden. Sobald die Übertragung des Zusatzdaten-Befehles DAT_RQ zum Zeitpunkt t = t₂ beendet ist, erfolgt durch die Verarbeitungseinheit 10 die Übertragung von Zusatzdaten ADD_DAT an das Positionsmesssystem 20 bis zum Zeitpunkt t = t₃. Hierbei kann es sich beispielsweise um Programmierungs-Parameter für das Positionsmesssystem 20 handeln.

Das Positionsmesssystem 20 antwortet nach dem Empfang des Positions-Anforderungsbefehles POS_RQ zum Zeitpunkt t = t₁ auf dem anderen Datenkanal 21 mit der unmittelbaren Übertragung der aktuellen Positionsdaten POS_DAT, die im Positionsmesssystem 20 zur Verfügung stehen. Dass es sich bei der Übertragung der Positionsdaten POS_DAT um die unmittelbare Antwort auf den vorhergehenden Positionsdaten-Anforderungsbefehl POS_RQ handelt sei durch die gestrichelte Verbindungslinie in Figur 1 angedeutet.
Sobald die aktuellen Positionsdaten POS_DAT zum Zeitpunkt t = t₄ vollständig übertragen sind, beginnt die Übertragung der zeitunkritischen Daten DAT' vom Positionsmesssystem 20 zur Verarbeitungseinheit 10. Zunächst wird hierbei im Zeitraum zwischen t = t₄ und t = t₅ ein Zusatzdaten-Befehl DAT_RO' an die Verarbeitungseinheit 10 übertragen, im nachfolgenden Zeitintervall zwischen t = t₅ und t = t₆ erfolgt die Übertragung von Zusatzdaten ADD_DAT'. Wesentlich ist an dieser Stelle, dass es sich bei der Übertragung der Zusatzdaten ADD_DAT' keineswegs um diejenigen Zusatzdaten handeln muss, die unmittelbar vorher von der Verarbeitungseinheit 10 mit dem Zusatzdaten-Befehl DAT_RQ auf dem anderen Datenkanal 11 angefordert wurden; es kann sich vielmehr um Zusatzdaten ADD_DAT' handeln, die bereits lange vorher von der Verarbeitungseinheit 10 angefordert wurden. Analog hierzu kann dann auch die Antwort des Positionsmesssystems 20 auf die Anforderung von Zusatzdaten im Zeitintervall t = t₁ und t = t₂ zu einem deutlich späteren Zeitpunkt t erfolgen. Im dargestellten Beispiel ist zur Erläuterung dieses Prinzips deshalb noch ein zweiter Teil der Zeitachse dargestellt, der ein später folgendes Zeitintervall nach dem ersten Datenaustausch-Intervall zwischen t₁ und t₆ darstellt. Im späteren Zeitintervall zwischen t = t₇ und t = t₁₃ erfolgt hierbei u.a. die Übertragung der zum Zeitpunkt t = t₁ angeforderten Zusatzdaten ADD_DAT. Auch hier ist durch die gestrichelte Verbindungslinie in der Figur 1 zwischen den Zusatzdaten DAT angedeutet, dass diese letztlich zusammengehören. Ansonsten verläuft der Datenaustausch in diesem Zeitintervall prinzipiell wie bereits oben erläutert.

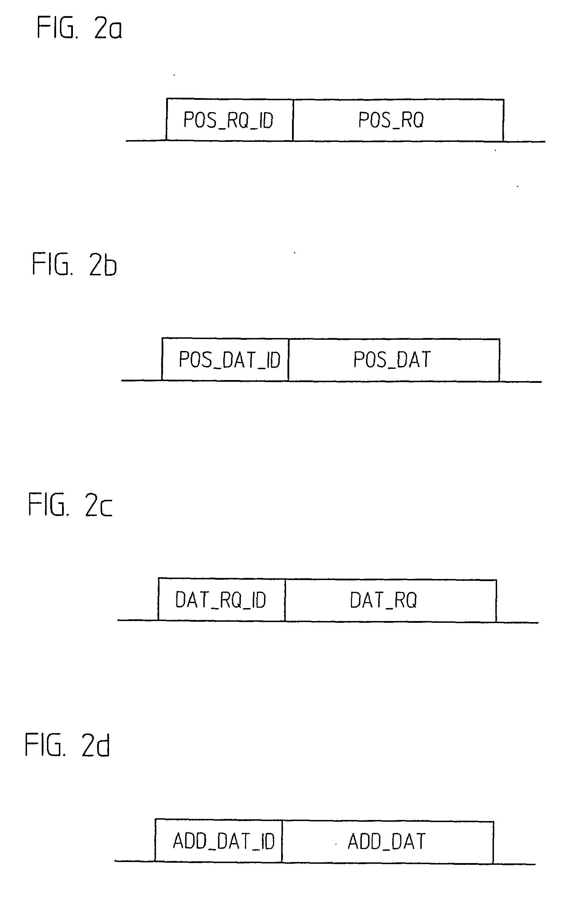

Anhand der Figuren 2a -2d sei nachfolgend die grundsätzliche Struktur der verschiedenen übertragenen digitalen Datenwörter erläutert, die im vorliegenden Beispiel als zeitkritische Daten bzw. zeitunkritische Daten übertragen werden.
Da zwischen der Verarbeitungseinheit und dem Positionsmesssystem auf den beiden Datenkanälen in der Regel ein kontinuierlicher Datenstrom in Form entsprechender digitaler Datenwörter ausgetauscht wird, ist es grundsätzlich erforderlich, die verschiedenen Arten der jeweiligen Datenwörter eindeutig zu identifizieren. Nur dann kann eine korrekte Verarbeitung der unterschiedlichen Datenwörter auf Seiten der Verarbeitungseinheit und des Positionsmesssystems sichergestellt werden. Aus diesem Grund ist vorgesehen vor jedem übertragenen Datenwort oder ggf. Datenpaket eine Identifizierungsinformation in Form einer spezifischen Datenwort-Kennung zu übertragen; über die Datenwort-Kennung wird jeweils der Beginn der nachfolgenden Daten sowie die Art der nachfolgenden Daten eindeutig für die jeweilige Gegenseite identifizierbar. Hierbei kann es sich bei den nachfolgenden Daten um einzelne digitale Datenwörter oder aber Datenpakete, bestehend aus einzelnen digitalen Datenwörtern handeln.
In den Figuren 2a - 2d ist jeweils schematisch veranschaulicht, wie sowohl vor den einzelnen zeitkritischen Daten POS_RQ, POS_DAT und den zeitunkritischen Daten DAT_RQ, ADD_DAT eine Datenwort-Kennung POS_RQ_ID, POS_DAT_ID, DAT_RQ_ID, ADD_DAT_ID übertragen wird. Auf eine Darstellung dieser zusätzlich vor dem jeweiligen Daten übertragenen Datenwort-Kennungen POS_RQ_ID, POS_DAT_ID, DAT_RQ_ID, ADD_DAT_1D wurde in Figur 1 im übrigen aus Übersichtlichkeitsgründen verzichtet. Anhand der jeweiligen Datenwort-Kennungen kann eine korrekte Verarbeitung bzw. Abarbeitung der übertragenen Daten auf beiden Seiten sichergestellt werden.

Da wie oben bereits erläutert, die Übertragung angeforderter zeitunkritischer Zusatzdaten ADD_DAT durchaus in einem größeren zeitlichen Abstand zur jeweiligen Anforderung über den Zusatzdaten-Befehl DAT_RQ erfolgen kann, muss des Weiteren sichergestellt werden, dass die übertragenen Zusatzdaten ADD_DAT auch als Antwort auf eine bestimmte vorhergehende Zusatzdaten-Anforderung erkennbar sind. Aus diesem Grund wird zu Beginn jedes übertragenen Datenwortes ADD_DAT oder ggf. Datenpaketes eine entsprechende Zuordnungsinformation mit den eigentlichen Zusatzdaten übertragen; dies kann etwa in Form einer einfachen Antwort-Nummer erfolgen, wenn der zugehörigen Frage eine entsprechende Frage-Nummer zugeordnet wurde. Selbstverständlich gibt es aber auch andere Möglichkeiten, die Zuordnungsinformationen zu übertragen bzw. eine eindeutige Zuordnung der übertragenen Zusatzdaten zu vorhergehenden Zusatzdaten-Anforderungen sicherzustellen.

Wie bereits oben angedeutet soll nunmehr anhand der Figuren 3a-3c veranschaulicht werden, wie im Rahmen der vorliegenden Erfindung grundsätzlich zu jeder Zeit eine Unterbrechung eines kontinuierlichen Datenstromes erfolgen kann, in dem gerade zeitunkritische bzw. zeitunkritischere Daten übertragen werden.
Gezeigt ist in Figur 3a die aktuell laufende Übertragung zeitunkritischer Daten DAT, DAT' von der Verarbeitungseinheit (NC) 10 zum Positionsmesssystem (ENCODER) 20. Den entsprechenden zeitunkritischen Daten DAT, DAT' ist wie vorab erläutert jeweils eine zugehörige Datenwort-Kennung DAT_ID, DAT'_ID' vorgeordnet, um die Art der entsprechenden zeitunkritischen Daten DAT, DAT' auf Seiten des Positionsmesssystems 20 eindeutig zu identifizieren.
Während die Übertragung des ersten Blockes zeitunkritischer Daten DAT inklusive Datenwort-Kennung DAT_ID im Zeitintervall zwischen t = t₀ und t = t₁ noch vollständig erfolgt, wird die Übertragung des nachfolgenden Blockes zeitunkritischer Daten DAT' zum Zeitpunkt t = t₂ unterbrochen. Dies erfolgt über das schematisch angedeutete Positions-Anforderungssignal RQ, mit dem z.B. ein Lageregelungskreis in der Verarbeitungseinheit 10 aktuelle Positionsdaten vom Positionsmesssystem 20 anfordert. Unmittelbar nach dem Eintreffen des Positions-Anforderungssignales RQ wird gemäß Figur 3b daher die laufende Übertragung der zeitunrikitschen Daten DAT' abgebrochen und stattdessen ein Positions-Anforderungsbefehl POS_RQ inklusive zugehöriger - nicht dargestellter - Datenwort-Kennung an das Positionsmesssystem 20 übertragen. Das Positionsmesssystem 20 antwortet ebenso umgehend mit der - nicht dargestellten - Übertragung der aktuell erfassten Positionsdaten, wie dies anhand von Figur 1 bereits erläutert wurde. Von der Verarbeitungseinheit 10 werden im Anschluss an die Übertragung des Positions-Anforderungsbefehles POS_RQ gemäß dem erfindungsgemäßen Übertragungsschema weitere zeitunkritische Daten DAT" an das Positionsmesssystem 20 übertragen. Des Weiteren ist es nunmehr noch erforderlich, die zum Zeitpunkt t = t₂ abgebrochene Übertragung des zeitunkritischen Datenwortes DAT' zu vervollständigen. Gemäß der Variante in Figur 3b erfolgt dies, indem im Zeitintervall zwischen t = t₃ und t = t₄ nochmals vollständig die entsprechenden Daten DAT' inklusive Datenwort-Kennung DAT'_ID' an das Positionsmesssystem 20 übertragen werden.

Alternativ zu diesem Vorgehen wäre es aber - wie in Figur 3c veranschaulicht - möglich, im Zeitintervall zwischen t = t₃ und t = t₄ lediglich den restlichen Teil REST-DAT' der zeitunkritischen Daten DAT' zu übertragen, deren vollständige Übertragung zum Zeitpunkt t = t₂ unterbrochen wurde.

Wie anhand dieses Beispieles erläutert, kann somit zu jeder Zeit ein kontinuierlicher Datenstrom mit zeitunkritischen Daten DAT, DAT' zwischen der Verarbeitungseinheit 10 und dem Positionsmesssystem 20 unterbrochen werden, um zeitkritische Positionsdaten anzufordern, die z.B. für eine hochdynamische Lageregelung erforderlich sind.

Im Rahmen der vorliegenden Erfindung ist es des Weiteren möglich, Positionsdaten POS_DAT zur Verarbeitung in der Verarbeitungseinheit 10 mit bestimmten Abarbeitungsprioritäten vom Positionsmesssystem 20 anzufordern. So können etwa in einer als Werkzeugmaschinensteuerung ausgebildeten Verarbeitungseinheit 10 Positionsdaten einerseits zur Lageregelung und andererseits zur Digitalisierung einer Werkstückkontur benötigt werden. Letzteres erfolgt üblicherweise mit Hilfe eines Tastsystems, das die jeweilige Werkstückkontur abtastet und im Fall eines erzeugten Antastsignales die aktuellen Positionsdaten POS_DAT des Tastsystems an die Verarbeitungseinheit 10 übermittelt. Die aktuellen Positionsdaten werden hierbei über das Positionsmesssystem 20 bestimmt. Während die Positionsdaten POS_DAT für die Lageregelung insbesondere im Fall einer hochdynamischen Regelung äußerst schnell zur Verfügung stehen müssen, ist eine Weiterverarbeitung der Positionsdaten POS_DAT zur Digitalisierung einer Werkstückkontur weniger zeitkritisch. Aus diesem Grund kann in der vorliegenden Erfindung vorgesehen werden, mehrere Positions-Anforderungsbefehle POS_RQⁿ vorzusehen (n = 1, 2....), denen unterschiedliche Abarbeitungsprioritäten zugeordnet sind. So ist beispielsweise ein erster Positions-Anforderungsbefehl POS_RQ¹ vorgesehen, der mit höchster Abarbeitungspriorität eine Übertragung von Positionsdaten POS_DAT an die Verarbeitungseinheit 10 veranlasst, die dort zur Positions- oder Lageregelung verwendet werden. Des Weiteren existiert mindestens ein zweiter Positions-Anforderungsbefehl POS_RQ², der mit niedrigerer Abarbeitungspriorität eine Übertragung der aktuellen Positionsdaten POS_DAT an die Verarbeitungseinheit 10 veranlasst, die dann dort zur Digitalisierung einer Werkstückkontur verwendet werden.

Die den verschiedenen Positions-Anforderungsbefehlen POS_RQⁿ zugewiesenen Abarbeitungsprioritäten haben zur Folge, dass derart eine nochmalige Prioritäts-Differenzierung in der Positionsabfrage bzw. Positionsdaten-Übertragung möglich ist. So kann beispielsweise die gerade laufende Übertragung von Positionsdaten POS_DAT zur Verarbeitungseinheit 10 unterbrochen werden, die dort zur Digitalisierung benötigt werden und vorher mit dem niedrigprioren Positions-Anforderungsbefehl POS_RQ² angefordert wurden. Die Unterbrechung erfolgt hierbei durch den entsprechenden Positions-Anforderungsbefehl POS_RQ¹, der die höchste Abarbeitungspriorität aufweist und eine umgehende Übertragung von Positionsdaten POS_DAT für die Positionsregelung in der Verarbeitungseinheit 10 veranlasst.

Selbstverständlich können auch mehr als zwei Positions-Anforderungsbefehle POS_RQⁿ mit entsprechenden Abarbeitungsprioritäten versehen werden usw..

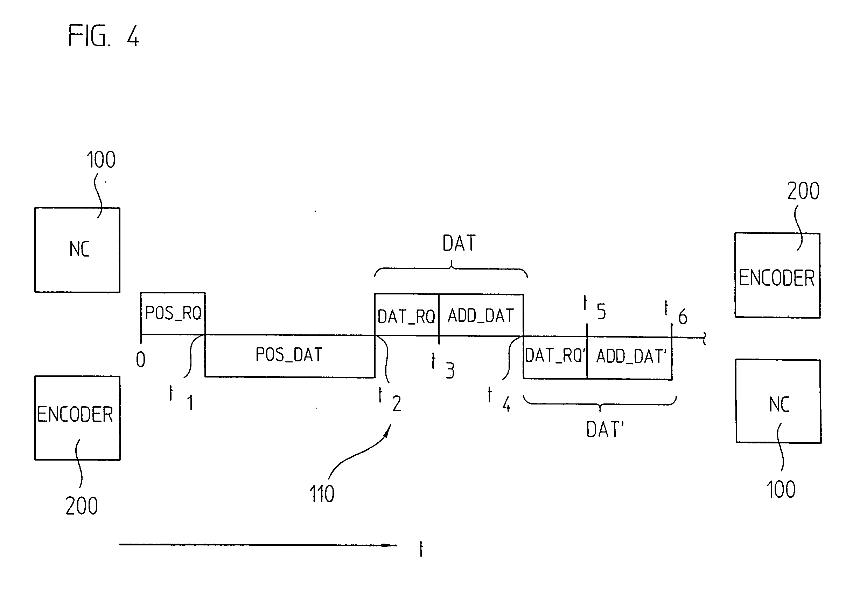

Während im bisher erläuterten Beispiel der Figur 1 eine Vollduplex-Variante der vorliegenden Erfindung mit zwei separaten Datenkanälen 11, 21 erläutert wurde, sei nachfolgend anhand von Figur 4 veranschaulicht, dass auch eine alternative Ausführungsform als Halbduplex-Variante ausgebildet werden kann.
Im Gegensatz zum ersten Beispiel in Figur 1 ist hierbei nur noch ein einziger Datenkanal 110 zwischen dem Positionsmesssystem 200 und der Verarbeitungseinheit 100 vorgesehen. Auf dem Datenkanal 110 werden gemeinsam die Daten vom Positionsmesssystem (ENCODER) 200 zur Verarbeitungseinheit (NC) 100 als auch die Daten von der Verarbeitungseinheit 100 zum Positionsmesssystem 200 übertragen. Aufgrund der gemeinsamen Nutzung eines einzigen Datenkanales 110 resultiert in dieser Ausführungsform ein etwas modifiziertes Übertragungsschema gegenüber dem ersten Beispiel.

Zum Zeitpunkt t = 0 erfolgt wiederum die Übertragung eines Positions-Anforderungsbefehles POS_RQ von der Verarbeitungseinheit 100 an das Positionsmesssystem 200. Dieses antwortet umgehend mit der Übertragung der aktuellen Positionsdaten POS_DAT zwischen den Zeitpunkten t = t₁ und t = t₂. Erst ab dem Zeitpunkt t = t₂, ab dem die Übertragung der Positionsdaten POS_DAT an die Verarbeitungseinheit 100 abgeschlossen ist, erfolgt im Zeitintervall zwischen t = t₂ und t = t₄ die Übertragung der zeitunkritischen, weiteren Daten DAT von der Verarbeitungseinheit 100 an das Positionsmesssystem 200. Im anschließenden Zeitintervall zwischen t = t₄ und t = t₆ antwortet das Positionsmesssystem 200 zum Abschluss dieses Datenübertragungs-Zyklusses schließlich ebenfalls mit der Übertragung weiterer, zeitunkritischer Daten DAT'.

Analog zum obigen Beispiel bestehen die übertragenen zeitunkritischen Daten DAT aus den Zusatzdaten ADD_DAT, ADD_DAT' und den Zusatzdaten-Befehlen DAT_RQ, DAT_RQ'. Aufgrund der gewählten Aufteilung der zu übertragenden Daten in zeitkritische und zeitunkritische, weitere Daten DAT, DAT' ist wiederum sichergestellt, dass auch schnelle Regelungszyklen auf Seiten der Verarbeitungseinheit 100 reaktionsschnell mit den erforderlichen Positionsdaten POS_DAT vom Positionsmesssystem 200 versorgt werden können.

Auch in dieser Variante der vorliegenden Erfindung lassen sich selbstverständlich die oben erläuterten Einzelmaßnahmen realisieren, auf eine wiederholte Beschreibung aller Details wird deshalb an dieser Stelle verzichtet.

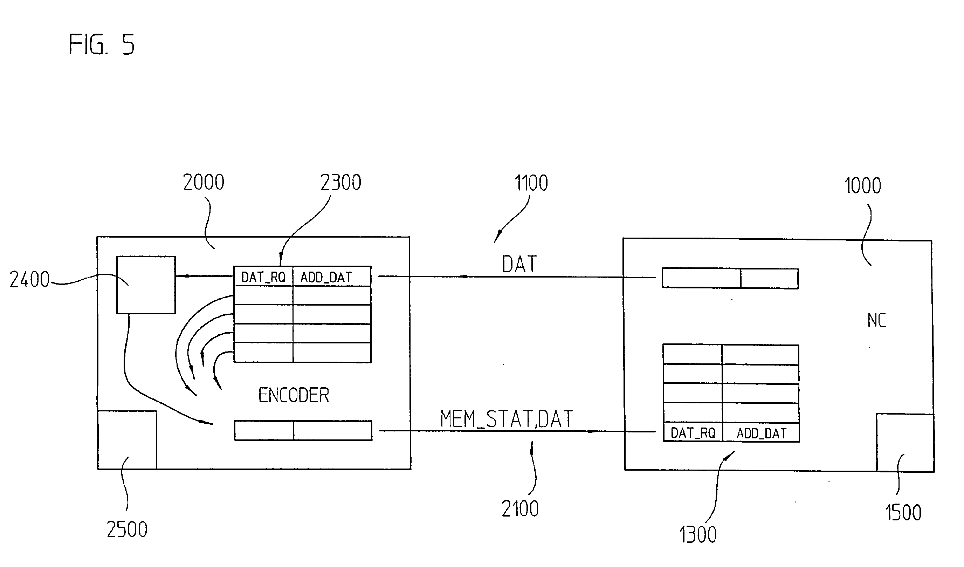

Abschließend seien anhand von Figur 5 nunmehr noch einige Einzelheiten in Bezug auf eine geeignete Vorrichtung zur Ausführung der erfindungsgemäßen Verfahren erläutert, die insbesondere im Zusammenhang mit der Übertragung der zeitunkritischen Daten von Bedeutung sind. Figur 5 zeigt hierbei in stark schematisierter Form eine Vollduplex-Variante der Vorrichtung mit einigen noch näher zu erläuternden Komponenten derselben, die insbesondere für die vorliegende Erfindung relevant sind.

Die Vorrichtung umfasst wiederum ein Positionsmesssystem (ENCODER) 2000 sowie eine nachgeordnete Verarbeitungseinheit (NC) 1000, die abgesehen von den nachfolgend erläuterten Komponenten einen üblichen Aufbau aufweisen Der Datentransfer zwischen dem Positionsmesssystem 2000 und der Verarbeitungseinheit 1000 erfolgt über zwei separate Datenkanäle 1100, 2100. Über den ersten Datenkanal 2100 werden Daten vom Positionsmesssystem 2000 zur Verarbeitungseinheit 1000 übertragen; auf dem zweiten Datenkanal 1100 erfolgt die Datenübertragung in entgegengesetzter Richtung, d.h. von der Verarbeitungseinheit 1000 zum Positionsmesssystem 2000.

Bevor anschließend auf die Erläuterung weiterer Details im Zusammenhang mit der Übertragung der zeitunkritischen Daten DAT eingegangen wird, sei an dieser Stelle auf eine schematisch angedeutete Steuereinheit 2500 im Positionsmesssystem 2000 hingewiesen. Deren wesentliche Aufgabe ist es, den erfindungsgemäßen Datentransfer wie oben erläutert sowie die interne Verarbeitung der unterschiedlichen Daten im Positionsmesssystem 2000 zu synchronisieren bzw. zu steuern. Bei der Steuereinheit 2500 kann es sich etwa um einen Prozessor oder aber um eine geeignete Logikschaltung handeln.

Analog hierzu umfasst selbstverständlich auch die Verarbeitungseinheit 1000 eine entsprechende Steuereinheit 1500, die u.a. den Datentransfer bzw. die Datenverarbeitung wie oben erläutert steuert. In der Regel ist die Steuereinheit 1500 auf Seiten der Verarbeitungseinheit 1000 als Prozessor ausgebildet.

Auf Seiten des Positionsmesssystems 2000 ist schematisiert ferner eine erste Speichereinheit 2300 dargestellt, die zur Abspeicherung der von der Verarbeitungseinheit 1000 übertragenen zeitunkritischen Daten DAT dient, die wie oben erläutert aus den Zusatzdaten ADD_DAT und den Zusatzdaten-Befehlen DAT_RQ bestehen. Eine derartige Abspeicherung der verschiedenen empfangenen zeitunkritischen Daten DAT ist insofern nötig, als deren Bearbeitung bzw. Abarbeitung in der Regel nicht umgehend erfolgen muss. Die während der Übertragung empfangenen Zusatzdaten ADD_DAT und Zusatzdaten-Befehle DAT_RQ werden daher in der Speichereinheit 2300 im Positionsmesssystem 2000 abgespeichert und je nach Priorität und Zeitaufwand für die Bearbeitung abgearbeitet. Beispielsweise kann es sich hierbei um die Anforderung von Systemparametern des Positionsmesssystems 2000 handeln, die in einem weiteren Speicherbaustein 2400 in Form eines EEPROMS im Positionsmesssystem 2000 abgelegt sind. Die angeforderten Parameter werden aus dem Speicherbaustein 2400 ausgelesen, was im Falle eines EEPROMS in der Regel relativ langsam erfolgt und anschließend über die vorher erläuterte Art und Weise an die Verarbeitungseinheit 1000 übertragen. Parallel hierzu kann auf Seiten des Positionsmesssystems 2000 die Abarbeitung weiterer zeitunkritischer Anfragen bzw. Anforderungen erledigt werden, die allesamt in der Speichereinheit 2300 abgespeichert sind; hierbei kann es sich z.B. um die Abfrage von Temperaturmesswerten, Beschleunigungsmesswerten etc. handeln.

Nach der entsprechenden Abarbeitung werden die zeitunkritischen Daten DAT wie oben beschrieben an die Verarbeitungseinheit 1000 übertragen und dort ebenfalls in einer geeigneten zweiten Speichereinheit 1300 abgespeichert. Die Verarbeitung der Daten in der Speichereinheit 1300 kann dann auch in der Verarbeitungseinheit je nach Dringlichkeit bzw. Priorität dieser Daten über entsprechende Prozesse erfolgen, die in geeigneter Art und Weise softwaremäßig realisiert sind.

Die Speichereinheiten 2300, 1300 auf Seiten des Positionsmesssystems 2000 bzw. der Verarbeitungseinheit 1000 weisen einen Aufbau auf, der der Struktur der übertragenen zeitunkritischen Daten DAT entspricht. Dies bedeutet, dass für jeden übertragenen Datensatz der zeitunkritischen Daten DAT ein erster Speicherbereich für die Zusatzdaten ADD_DAT sowie ein zweiter Speicherbereich für die Zusatzdaten-Befehle DAT_RQ vorgesehen ist. Die entsprechenden Speicherbereiche müssen hinsichtlich ihrer Größe selbstverständlich auf die Größe der entsprechenden Datenwörter der zeitunkritischen Daten DAT abgestimmt werden.

Zu erwähnen ist im Zusammenhang mit den Speichereinheiten 1300, 2300 ferner, dass im Rahmen der erfindungsgemäßen Datenübertragung neben den oben erläuterten Daten des Weiteren noch Speichereinheits-Zustandsdaten MEM_STAT regelmäßig zwischen dem Positionsmesssystem 2000 und der Verarbeitungseinheit 1000 übertragen werden. Hierbei handelt es sich um Informationen in Bezug auf die jeweilige Speichereinheit 1300, 2300. Zumindest umfassen die Speichereinheits-Zustandsdaten MEM_STAT hierbei Informationen bzgl. des aktuellen Speicherzustandes, d.h. etwa ob die jeweilige Speichereinheit 1300, 2300 voll, leer oder teilweise gefüllt ist usw.. Dies ist insbesondere bei der Speichereinheit 2300 des Positionsmesssystems 2000 von Bedeutung, da auf Seiten der Verarbeitungseinheit 1000 im Fall einer vollen Speichereinheit 2300 keine weiteren Daten DAT mehr in Richtung des Positionsmesssystems 2000 übertragen werden können. Aufgrund der regelmäßigen Übertragung der Speichereinheits-Zustandsdaten MEM_STAT kann somit sichergestellt werden, dass die jeweilige Gegenseite keine derartigen Daten DAT mehr überträgt, wenn die entsprechende Speichereinheit 1300, 2300 voll ist.

Im Rahmen der vorliegenden Erfindung existieren neben den erläuterten Ausführungsformen selbstverständlich auch noch alternative Varianten.

## Patentansprüche

1. Verfahren zur seriellen Datenübertragung zwischen einem Positionsmesssystem (20; 200; 2000) und einer Verarbeitungseinheit (10; 100; 1000), bei dem vom Positionsmesssystem (20; 200; 2000) Positionsdaten (POS_DAT, POS_DAT') und weitere Daten (DAT, DAT') in serieller Form als digitale Datenwörter an die Verarbeitungseinheit (10; 100; 1000) übertragen werden,
- wobei die zu übertragenden Daten in zeitkritische und zeitunkritische Daten aufgeteilt werden und die Positionsdaten (POS_DAT, POS_DAT') sowie Positionsanforderungsbefehle (POS_RQ, POS_RQ') zeitkritische Daten darstellen, während weitere Daten (DAT, DAT') in Form von Zusatzdaten (ADD_DAT, ADD_DAT') und Zusatzdatenbefehlen (DAT_RQ, DAT_RQ') zeitunkritische Daten darstellen und
- wobei auf einen Positions-Anforderungsbefehl (POS_RQ, POS_RQ') der Verarbeitungseinheit (10; 100; 1000) aktuelle Positionsdaten (POS_DAT, POS_DAT') vom Positionsmesssystem (10; 100; 1000) zur Verarbeitungseinheit (20; 200; 2000) übertragen werden und auf die Positionsdaten (POS_DAT, POS_DAT') folgend weitere Daten (DAT, DAT') vom Positionsmesssystem (20; 200; 2000) an die Verarbeitungseinheit (10; 100; 1000) übertragen werden, deren Verarbeitung zeitunkritisch ist und
- wobei im Fall eines im Positionsmesssystem (20; 200; 2000) eintreffenden Positions-Anforderungsbefehles (POS_RQ) während der Übertragung zeitunkritischer Daten (DAT, DAT') an die Verarbeitungseinheit (10; 100; 10000) die Übertragung der zeitunkritischen Daten (DAT, DAT') abgebrochen wird und anstelle dessen die Übertragung der angeforderten aktuellen Positionsdaten (POS_DAT) an die Verarbeitungseinheit (10; 100; 1000) erfolgt und
- wobei mehrere verschiedene Positions-Anforderungsbefehle (POS_RQⁿ) existieren, denen unterschiedliche Abarbeitungsprioritäten zugeordnet sind und die im Fall der Übertragung an das Positionsmesssystem (20; 20000; 2000) entsprechend ihren zugeordneten Abarbeitungsprioritäten eine Übertragung der aktuellen Positionsdaten (POS_DAT) an die Verarbeitungseinheit (10; 100; 1000) veranlassen.

2. Verfahren zur seriellen Datenübertragung zwischen einem Positionsmesssystem und einer Verarbeitungseinheit (10; 100; 1000), bei dem vom Positionsmesssystem Positionsdaten (POS_DAT, POS_DAT") und weitere Daten (DAT, DAT') in serieller Form als digitale Datenwörter an die Verarbeitungseinheit (10; 100; 1000) übertragen werden,
- wobei die zu übertragenden Daten in zeitkritische und zeitunkritische Daten aufgeteilt werden und die Positionsdaten (POS_DAT, POS_DAT') sowie Positionsanforderungsbefehle (POS_RQ, POS_RQ') zeitkritische Daten darstellen, während weitere Daten (DAT, DAT') in Form von Zusatzdaten (ADD_DAT, ADD_DAT') und Zusatzdatenbefehlen (DAT_RQ, DAT_RQ') zeitunkritische Daten darstellen und
- wobei von der Verarbeitungseinheit (10; 100; 1000) zur Anforderung von Positionsdaten (POS_DAT, POS_DAT') ein Positions-Anforderungsbefehl (POS_RQ, POS_RQ') an das Positionsmesssystem (20; 200; 2000) übertragen wird und auf den Positions-Anforderungsbefehl (POS_RQ, POS_RQ') folgend weitere Daten (DAT, DAT") von der Verarbeitungseinheit (10; 100; 1000) an das Positionsmesssystem (20; 200; 2000) übertragen werden, deren Verarbeitung zeitunkritisch ist und
- wobei im Fall eines in der Verarbeitungseinheit (10) eintreffenden Positions-Anforderungssignales (RQ) während der Übertragung zeitunkritischer Daten (DAT, DAT') die Übertragung der zeitunkritischen Daten (DAT, DAT') abgebrochen wird und anstelle dessen die umgehende Übertragung eines Positionsdaten-Anforderungsbefehles (POS_RQ) an das Positionsmesssystem (20) erfolgt, woraufhin vom Positionsmesssystem (20) umgehend die aktuellen Positionsdaten (POS_DAT) an die Verarbeitungseinheit (10) übertragen werden und
- wobei mehrere verschiedene Positions-Anforderungsbefehle (POS_RQⁿ) existieren, denen unterschiedliche Abarbeitungsprioritäten zugeordnet sind und die im Fall der Übertragung an das Positionsmesssystem (20; 20000; 2000) entsprechend ihren zugeordneten Abarbeitungsprioritäten eine Übertragung der aktuellen Positionsdaten (POS_DAT) an die Verarbeitungseinheit (10; 100; 1000) veranlassen.

3. Verfahren nach Anspruch 1 oder 2, bei dem die Positionsdaten (POS_DAT) und die Positions-Anforderungsbefehle (POS_RQ) als digitale Datenwörter mit einer vorgegebenen Wortlänge oder als Datenpakete bestehend aus digitalen Datenwörtern übertragen werden.

4. Verfahren nach Anspruch 1 oder 2, bei dem als weitere zeitunkritische Daten (DAT) jeweils Zusatzdaten (ADD_DAT) und Zusatzdaten-Befehle (DAT_RQ) als digitale Datenwörter mit einer vorgegebenen Wortlänge oder als Datenpakete bestehend aus digitalen Datenwörtern übertragen werden.

5. Verfahren nach Anspruch 2, bei dem die abgebrochene Übertragung der zeitunkritischen Daten (DAT) an das Positionsmesssystem zu einem späteren Zeitpunkt vervollständigt wird, wenn die angeforderten Positionsdaten (POS_DAT) vom Positionsmesssystem (20) an die Verarbeitungseinheit (10) vollständig übertragen wurden.

6. Verfahren nach Anspruch 1 oder 2, bei dem alle zwischen Positionsmesssystem (200) und Verarbeitungseinheit (100) übertragenen Daten über einen gemeinsamen Datenkanal (110) übertragen werden.

7. Verfahren nach Anspruch 1 oder 2, bei dem die vom Positionsmesssystem (20; 2000) zur Verarbeitungseinheit (10; 1000) übertragenen Daten über einen ersten Datenkanal (21; 2100) übertragen werden und die von der Verarbeitungseinheit (10; 1000) an das Positionsmesssystem (20; 2000) übertragenen Daten über einen zweiten Datenkanal (11; 1100) übertragen werden.

8. Verfahren nach Anspruch 1 oder 2, bei dem auf Seiten des Positionsmesssystems (2000) die von der Verarbeitungseinheit (1000) übertragenen zeitunkritischen Daten (DAT_RQ, ADD_DAT) in einer ersten Speichereinheit (2300) im Positionsmesssystem (2000) abgespeichert werden.

9. Verfahren nach Anspruch 1 oder 2, bei dem auf Seiten der Verarbeitungseinheit (1000) die vom Positionsmesssystem (2000) übertragenen zeitunkritischen Daten (DAT_RQ, ADD_DAT) in einer zweiten Speichereinheit (1300) in der Verarbeitungseinheit (1000) abgespeichert werden.

10. Verfahren nach Anspruch 9, bei dem Speichereinheits-Zustandsdaten (MEM_STAT) vom Positionsmesssystem (2000) an die Verarbeitungseinheit (1000) übertragen werden, die zumindest Informationen bzgl. des aktuellen Speicherzustandes der ersten Speichereinheit (2300) im Positionsmesssystem (2000) umfassen.

11. Verfahren nach Anspruch 1, bei dem
- ein erster Positions-Anforderungsbefehl (POS_RQ¹) existiert, der mit höchster Abarbeitungspriorität eine Übertragung der aktuellen Positionsdaten (POS_DAT) an die Verarbeitungseinheit (10; 100; 1000) veranlasst, die dort zur Positionsregelung verwendet werden und ferner
- ein zweiter Positions-Anforderungsbefehl (POS_RQ²) existiert, der mit niedrigerer Abarbeitungspriorität eine Übertragung der aktuellen Positionsdaten (POS_DAT) an die Verarbeitungseinheit (10; 100; 1000) veranlasst, die dort zur Digitalisierung einer Werkstückkkontur verwendet werden.

12. Verfahren nach Anspruch 11, bei dem nach der Übertragung eines Positions-Anforderungbefehles (POS_RQ¹) mit höherer Abarbeitungspriorität zum Positionsmesssystem (10; 100; 1000) auch die laufende Übertragung von Positionsdaten (POS_DAT) zur Verarbeitungseinheit (20; 200; 2000) unterbrochen wird, die von der Verarbeitungseinheit (10; 1000; 1000) mit einem Positions-Anforderungsbefehl (POS_RQ²) mit niedrigerer Abarbeitungspriorität angefordert wurden.

13. Verfahren nach Anspruch 3, bei dem in Verbindung mit jedem übertragenen digitalen Datenwort oder Datenpaket eine Datenwort-Kennung (POS_RQ_ID, POS_DAT_ID, DAT_RQ_ID, ADD_DAT_ID) übertragen wird, die den Beginn und die Art des jeweils zugehörigen Datenwortes oder Datenpaketes eindeutig identifiziert.

14. Positionsmesssystem, ausgebildet zur Durchführung eines Verfahrens nach einem der Ansprüche 1-13.

15. Verarbeitungseinheit, ausgebildet zur Durchführung eines Verfahrens nach einem der Ansprüche 1 - 13.

16. Vorrichtung, umfassend ein Positionsmesssystem sowie eine Auswerteeinheit, ausgebildet zur Durchführung eines Verfahrens nach einem der Ansprüche 1 - 13.

## Claims

1. Method for serial data transmission between a position measuring system (20; 200; 2000) and a processing unit (10; 100; 1000), in which the position measuring system (20; 200; 2000) transmits position data (POS_DAT, POS_DAT') and further data (DAT, DAT') in serial form as digital data words to the processing unit (10; 100; 1000),
- wherein the data to be transmitted are split into time-critical and time-uncritical data and the position data (POS_DAT, POS_DAT') and also position request commands (POS_RQ, POS_RQ') are time-critical data, whereas further data (DAT, DAT') in the form of supplementary data (ADD_DAT, ADD_DAT') and supplementary data commands (DAT_RQ, DAT_RQ') are time-uncritical data, and
- wherein a position request command (POS_RQ, POS_RQ') from the processing unit (10; 100; 1000) prompts current position data (POS_DAT, POS_DAT') to be transmitted from the position measuring system (10; 100; 1000) to the processing unit (20; 200; 2000) and, following the position data (POS_DAT, POS_DAT'), further data (DAT, DAT') to be transmitted from the position measuring system (20; 200; 2000) to the processing unit (10; 100; 1000), the processing of said further data being time-uncritical, and
- wherein, in the event of a position request command (POS_RQ) arriving in the position measuring system (20; 200; 2000) during the transmission of time-uncritical data (DAT, DAT') to the processing unit (10; 100; 10000), the transmission of the time-uncritical data (DAT, DAT') is terminated and instead the requested current position data (POS_DAT) are transmitted to the processing unit (10; 100; 1000), and
- wherein a plurality of different position request commands (POS_RQ") exist that have different associated execution priorities and that, in the event of transmission to the position measuring system (20; 20000; 2000), prompt transmission of the current position data (POS_DAT) to the processing unit (10; 100; 1000) in accordance with their associated execution priorities.

2. Method for serial data transmission between a position measuring system and a processing unit (10; 100; 1000), in which the position measuring system transmits position data (POS_DAT, POS_DAT') and further data (DAT, DAT') in serial form as digital data words to the processing unit (10; 100; 1000),
- wherein the data to be transmitted are split into time-critical and time-uncritical data and the position data (POS_DAT, POS_DAT') and also position request commands (POS_RQ, POS_RQ') are time-critical data, whereas further data (DAT, DAT') in the form of supplementary data (ADD_DAT, ADD_DAT') and supplementary data commands (DAT_RQ, DAT_RQ') are time-uncritical data, and
- wherein the processing unit (10; 100; 1000) requests position data (POS_DAT, POS_DAT') by transmitting a position request command (POS_RQ, POS_RQ') to the position measuring system (20; 200; 2000) and, following the position request command (POS_RQ, POS-RQ'), transmitting further data (DAT, DAT") from the processing unit (10; 100; 1000) to the position measuring system (20; 200; 2000), the processing of said further data being time-uncritical, and
- wherein, in the event of a position request signal (RQ) arriving in the processing unit (10) during the transmission of time-uncritical data (DAT, DAT'), the transmission of the time-uncritical data (DAT, DAT') is terminated and instead a position data request command (POS_RQ) is immediately transmitted to the position measuring system (20), whereupon the position measuring system (20) immediately transmits the current position data (POS_DAT) to the processing unit (10), and
- wherein a plurality of different position request commands (POS_RQ") exist that have different associated execution priorities and that, in the event of transmission to the position measuring system (20; 20000; 2000), prompt transmission of the current position data (POS_DAT) to the processing unit (10; 100; 1000) in accordance with their associated execution priorities.

3. Method according to Claim 1 or 2, in which the position data (POS_DAT) and the position request commands (POS_RQ) are transmitted as digital data words having a prescribed word length or as data packets consisting of digital data words.

4. Method according to Claim 1 or 2, in which the further time-uncritical data (DAT) transmitted are in each case supplementary data (ADD_DAT) and supplementary data commands (DAT_RQ) as digital data words having a prescribed word length or as data packets consisting of digital data words.

5. Method according to Claim 2, in which the terminated transmission of the time-uncritical data (DAT) to the position measuring system is completed at a later time when the requested position data (POS_DAT) have been transmitted from the position measuring system (20) to the processing unit (10) completely.

6. Method according to Claim 1 or 2, in which all the data transmitted between position measuring system (200) and processing unit (100) are transmitted via a common data channel (110).

7. Method according to Claim 1 or 2, in which the data transmitted from the position measuring system (20; 2000) to the processing unit (10; 1000) are transmitted via a first data channel (21; 2100) and the data transmitted from the processing unit (10; 1000) to the position measuring system (20; 2000) are transmitted via a second data channel (11; 1100).

8. Method according to Claim 1 or 2, in which the position measuring system (2000) stores the time-uncritical data (DAT_RQ, ADD_DAT) transmitted from the processing unit (1000) in a first memory unit (2300) in the position measuring system (2000).

9. Method according to Claim 1 or 2, in which the processing unit (1000) stores the time-uncritical data (DAT_RQ, ADD_DAT) transmitted from the position measuring system (2000) in a second memory unit (1300) in the processing unit (1000).

10. Method according to Claim 9, in which memory unit state data (MEM_STAT) that comprise at least information concerning the current memory state of the first memory unit (2300) in the position measuring system (2000) are transmitted from the position measuring system (2000) to the processing unit (1000).

11. Method according to Claim 1, in which
- a first position request command (POS_RQ¹) exists that, with the highest execution priority, prompts transmission of the current position data (POS_DAT) to the processing unit (10; 100; 1000), which are used therein for position control, and also
- a second position request command (POS_RQ²) exists that, with lower execution priority, prompts transmission of the current position data (POS_DAT) to the processing unit (10; 100; 1000), which are used therein for digitizing a workpiece contour.

12. Method according to Claim 11, in which, following the transmission of a position request command (POS_RQ¹) having a higher execution priority to the position measuring system (10; 100; 1000), the ongoing transmission of position data (POS_DAT) to the processing unit (20; 200; 2000) that have been requested by the processing unit (10; 1000; 1000) with a position request command (POS_RQ²) having lower execution priority is also interrupted.

13. Method according to Claim 3, in which in conjunction with each transmitted digital data word or data packet a data word identifier (POS_RQ_ID, POS_DAT_ID, DAT_RQ_ID, ADD_DAT_ID) is transmitted that explicitly identifies the beginning and the type of the respective associated data word or data packet.

14. Position measuring system, designed to perform a method according to one of Claims 1 - 13.

15. Processing unit, designed to perform a method according to one of Claims 1 - 13.

16. Apparatus, comprising a position measuring system and an evaluation unit, designed to perform a method according to one of Claims 1 - 13.

## Revendications

1. Procédé de transmission de données en série entre un système de mesure de position (20 ; 200 ; 2000) et une unité de traitement (10 ; 100 ; 1000), dans lequel des données de position (POS_DAT, POS_DAT') et d'autres données (DAT, DAT') sont transmises sous forme série en tant que mots de données numériques par le système de mesure de position (20 ; 200 ; 2000) à l'unité de traitement (10 ; 100 ; 1000),
- dans lequel les données devant être transmises sont réparties en données critiques temporellement et non critiques temporellement et les données de position (POS_DAT, POS_DAT') et des ordres de demande de position (POS_RQ, PS_RQ') représentent des données critiques temporellement, tandis que les autres données (DAT, DAT') représentent des données non critiques temporellement sous forme de données supplémentaires (ADD_DAT, ADD_DAT') et d'ordres de données supplémentaires (DAT_RQ, DAT_RQ') et
- dans lequel, lors d'un ordre de demande de position (POS_RQ, POS_RQ') de l'unité de traitement (10 ; 100 ; 1000), des données de position courantes (POS_DAT, POS_DAT') sont transmises par le système de mesure de position (10 ; 100 ; 1000) à l'unité de traitement (20, 200 ; 2000) et, lors de l'arrivée de données de position (POS_DAT, POS_DAT'), d'autres données (DAT, DAT') sont ensuite transmises par le système de mesure de position (20 ; 200 ; 2000) à l'unité de traitement (10 ; 100 ; 1000), le traitement desdites données étant non critique temporellement et
- dans lequel, dans le cas où un ordre de demande de position (POS_RQ) arrive sur le système de mesure de position (20 ; 200 ; 2000) pendant la transmission de données critiques temporellement (DAT, DAT') à l'unité de traitement (10 ; 100 ; 10000), la transmission des données non critiques temporellement (DAT, DAT') est interrompue et, au lieu de celles-ci, la transmission des données de position courantes demandées (POS_DAT) à l'unité de traitement (10 ; 100 ; 1000) est effectuée et
- dans lequel il existe une pluralité d'ordres de demande de position différents (POS_RQⁿ) auxquels sont attribuées des priorités de traitement différentes et qui ordonnent une transmission des données de position courantes (POS_DAT) à l'unité de traitement (10 ; 100 ; 1000) dans le cas de la transmission au système de mesure de position (20 ; 20000 ; 2000) d'une manière qui correspond aux priorités de traitement qui leur sont attribuées.

2. Procédé de transmission de données en série entre un système de mesure de position et une unité de traitement (10 ; 100 ; 1000), dans lequel des données de position (POS_DAT, POS_DAT') et d'autres données (DAT, DAT') sont transmises sous forme série en tant que mots de données numériques par le système de mesure de position à l'unité de traitement (10 ; 100 ; 1000),
- dans lequel les données devant être transmises sont réparties en données critiques temporellement et non critiques temporellement et les données de position (POS_DAT, POS_DAT') et des ordres de demande de position (POS_RQ, POS_RQ') représentent des données critiques temporellement, tandis que les autres données (DAT, DAT') sous forme de données supplémentaires (ADD_DAT, ADD_DAT') et des ordres de données supplémentaires (DAT_RQ, DAT_RQ') représentent des données non critiques temporellement et
- dans lequel un ordre de demande de position (POS_RQ, POS_RQ') est transmis par l'unité de traitement (10 ; 100 ; 1000) au système de mesure de position (20 ; 200 ; 2000) pour demander des données de position (POS_DAT, POS_DAT') et lors de l'ordre de demande de position (POS_RQ, POS_RQ'), d'autres données (DAT, DAT") sont ensuite transmises par l'unité de traitement (10 ; 100 ; 1000) au système de mesure de position (20 ; 200 ; 2000), le traitement desdites données étant non critique temporellement, et
- dans lequel, dans le cas où un signal de demande de position (RQ) arrive sur l'unité de traitement (10) pendant la transmission de données non critiques temporellement (DAT, DAT'), la transmission des données non critiques temporellement (DAT, DAT') est interrompue et, au lieu de celles-ci, la transmission immédiate d'un ordre de demande de données de position (POS_RQ) au système de position (20) est effectuée, puis les données de position courantes (POS_DAT) sont immédiatement transmises par le système de mesure de position (20) à l'unité de traitement (10) et
- dans lequel il existe une pluralité d'ordres de demande de positions différents (POS_RQⁿ) auxquels sont attribuées des priorités de traitement différentes et une transmission des données de position courantes (POS_DAT) est ordonnée à l'unité de traitement (10 ; 100 ; 1000) dans le cas de la transmission au système de mesure de position (20 ; 20000 ; 2000) d'une manière qui correspond aux priorités de traitement qui leur sont attribuées

3. Procédé selon la revendication 1 ou 2, dans lequel les données de position (POS_DAT) et les ordres de demande de position (POS_RQ) sont transmis sous la forme de mots de données numériques ayant une longueur de mot prédéterminée ou sous la forme de paquets de données constitués de mots de données numériques.

4. Procédé selon la revendication 1 ou 2, dans lequel des données supplémentaires respectives (ADD_DAT) et des ordres de données supplémentaires (DAT_RQ) sont transmis en tant que données non critiques temporellement (DAT) sous la forme de mots de données numériques ayant une longueur de mot prédéterminée ou sous la forme de paquets de données constitués de mots de données numériques.

5. Procédé selon la revendication 2, dans lequel la transmission interrompue des données non critiques temporellement (DAT) au système de mesure de position est achevée en un point ultérieur dans le temps lorsque les données de position demandées (POS_DAT) ont été entièrement transmises par le système de mesure de position (20) à l'unité de traitement (10).

6. Procédé selon la revendication 1 ou 2, dans lequel toutes les données transmises entre le système de mesure de position (200) et l'unité de traitement (100) sont transmises par l'intermédiaire d'un canal de données commun (110).

7. Procédé selon la revendication 1 ou 2, dans lequel les données transmises du système de mesure de position (20 ; 2000) à l'unité de traitement (10 ; 1000) sont transmises par l'intermédiaire d'un premier canal de données (21 ; 2100) et les données transmises par l'unité de traitement (10 ; 1000) au système de mesure de position (20 ; 2000) sont transmises par l'intermédiaire d'un second canal de données (11 ; 1100).

8. Procédé selon la revendication 1 ou 2, dans lequel les données non critiques temporellement (DAT_RQ, ADD_DAT) transmises par l'unité de traitement (1000) du côté du système de mesure de position (2000) sont stockées dans une première unité de mémoire (2300) dans le système de mesure de position (2000).

9. Procédé selon la revendication 1 ou 2, dans lequel les données non critiques temporellement (DAT_RQ, ADD_DAT) transmises par le système de mesure de position (2000) du côté de l'unité de traitement (1000) sont stockées dans une seconde unité de mémoire (1300) dans l'unité de traitement (1000).

10. Procédé selon la revendication 9, dans lequel des données d'état d'unité de mémoire (MEM_STAT) sont transmises par le système de mesure de position (2000) à l'unité de traitement (1000), lesquelles données comprennent au moins des informations concernant l'état de mémoire courant de la première unité de mémoire (2300) dans le système de mesure de position (2000).

11. Procédé selon la revendication 1, dans lequel
- il existe un premier ordre de demande de position (POS RQ¹) qui ordonne avec une priorité la plus élevée une transmission des données de position courantes (POS_DAT) à l'unité de traitement (10 ; 200 ; 1000), lesquelles données y sont utilisées à des fins de commande de position, et
- il existe en outre un second ordre de demande de position (POS_RQ²) qui ordonne avec une priorité de traitement inférieure une transmission des données de position courantes (POS_DAT) à l'unité de traitement (10, 100, 1000), lesquelles données y sont utilisées à des fins de numérisation d'un contour de pièce à usiner.

12. Procédé selon la revendication 11, dans lequel, après la transmission d'un ordre de demande de position (POS_RQ¹) avec une priorité de traitement supérieure au système de mesure de position (10, 100, 1000), la transmission en cours de données de position (POS_DAT) à l'unité de traitement (20 ; 200 ; 2000) est également interrompue, lesquelles données ont été demandées par l'unité de traitement (10 ; 1000 ; 1000) au moyen d'un ordre de demande de position (POS_RQ²) ayant une priorité de traitement inférieure.

13. Procédé selon la revendication 3, dans lequel un identifiant de mot de données (POS_RQ_ID, POS_DAT_ID, DAT_RQ_ID, ADD_RQ_ID) qui identifie de manière unique le début et le type du mot de données ou du paquet de données correspondant respectif est transmis en association avec chaque mot de données ou paquet de données numérique transmis.

14. Système de mesure de position conçu pour mettre en oeuvre un procédé selon l'une quelconque des revendications 1-13.

15. Unité de traitement conçue pour mettre en oeuvre un procédé selon l'une quelconque des revendications 1-13.

16. Dispositif, comprenant un système de mesure de position et une unité d'évaluation, conçus pour mettre en oeuvre un procédé selon l'une quelconque des revendications 1-13.
